# EUROPEAN PATENT APPLICATION

(11) **EP 2 309 701 A1**
(43) Date of publication of application: **13.04.2011**
(21) Application number: 09382197.3
(22) Date of filing: 06.10.2009
(51) Int. Cl.: H04L 29/08, G06F 3/06, G06F 17/30

(54) **Data storage device**

(71) Applicant: Telefónica, S.A., 28013 Madrid (ES)
(72) Inventor: Garcia Puga, Javier, 28013, MADRID (ES); Perez Gonzalez, Francisco, Javier, 28013, MADRID (ES); Hierro Sureda, Juan, J., 28013, MADRID (ES); Tsouroulas, Nikolaos, 28013, MADRID (ES); Vaquero Gonzalez, Luis, M., 28013, MADRID (ES); Rodero Merino, Luis, 28013, MADRID (ES)
(74) Representative: Carpintero Lopez, Francisco

(57) **Abstract**

A data storage device (1) connectable to an electronic device (2) and a remote storage server (4), which comprises memory managing means configured to receive a request for a piece of information from the electronic device (2) and if said piece of information is stored both in a local memory (5) of the data storage device (1) and in the remote server (4), retrieving the requested piece of information from the local memory (5) to reduce latency.

## Description

### FIELD OF THE INVENTION

The present invention has its application within the telecommunications sector and, especially, in the industrial area engaged in providing data storage.

### BACKGROUND OF THE INVENTION - RELATED ART

A USB (Universal Serial Bus) flash drive is a small storage device based on a flash memory which is used to store information. This sort of memories has become a popular way of carrying personal data, overshadowing in this particular usage, traditional diskettes, CD and DVD. They can be easily found in the market in a wide variety of capacities.

Nowadays, operating systems are capable of reading and writing from/to USB flash drives, just by plugging them in to a USB port which supplies power to the device without the need of an external power source or battery.

Nevertheless, traditional USB flash drives present the disadvantages of having limited storage capacity, as well as having the risk of data loss in case the USB flash drive is lost or deteriorated, which typically occurs even due to normal usage.

Additionally, regarding remote storage, Storage Area Networks (SAN) are architectures to attach remote storage devices to computers in such a way that the devices appear as locally attached to the Operating System (OS). That is, the fact that the device is actually running in a remote device is transparent to the OS. A handful of methods for storage virtualization in SAN have recently been proposed, like in US 6,898,670 B1.

Network attached storage (NAS), in contrast to SAN, uses file-based protocols such as NFS (Network File System) or SMB (Server Message Block)/Common Internet File System (CIFS) where it is known by the OS that the storage is remote, and computers request a portion of an abstract file rather than a disk block. The transparency is still kept at the application level, which keeps using the same APIs to access data. Intercepting selected system calls at the user level, to build a global file system, which allows users to treat remote files exactly as if they were local through the FTP and HTTP protocols, is known in the state-of-the-art. These were, however, inflexible monolithic solutions.

Cloud technology solves this disadvantage by providing dynamic access to a set of heterogeneous resources in a seamless manner. From all the very different types of Cloud services, Software as a Service (SaaS) brings Internet-enabled access to storage, middleware, collaboration, and database capabilities. Storage as a Service (StaaS) detaches the user from the storage services: a common interface is provided for several storage services of diverse nature that dwell "in the Cloud". StaaS promises unlimited on demand access to these storage services that are billed on a pay-per-use basis. The advantage for users is that they do not need to take care of the storage infrastructure. The StaaS provider is responsible of managing the physical device, creation of backups, and replication of data for failure tolerance. Typical StaaS systems sit on top of pools of storage hardware units (such as arrays of disks, possibly distributed in several datacenters). Storage capacity is created on demand and billed on a pay-per-use basis.

Some StaaS services are limited to providing storage space for plain data objects (files). Users make calls to the StaaS system to store new objects. The StaaS system assigns an id to each object for future operations (retrieve, update, delete). Newer StaaS systems provide different, more intuitive interfaces to users. These new StaaS systems present to each user the illusion of having a unique, isolated storage device. That is, a StaaS system creates virtual storage devices from the storage pool that can be accessed just like local storage devices. Also, rich interfaces can be provided for configuration and access to the virtual storage space through Internet.

In a StaaS system, a connected computer, after being properly configured, connects over a communication means (e.g. a WAN or WWAN link) to a middleware layer which relies on a storage virtualization layer to access the physical storage pool. The Storage Pool is formed by a cluster of disk arrays. A Storage Virtualization layer can be set on top of it to create virtual disks. This eases the Middleware Layer tasks, as there is no need to worry about mapping physical capacity to logical disks. The Storage Virtualization also takes care of tasks such as data replication for failure tolerance, freeing the upper layers from those issues.

The Middleware Layer only requirse being accessible through the wireless link. This can be done in different ways. Then, the communication between the Middleware Layer and the device uses any well-known standard protocol such as the NFS or CIFS protocols. The Middleware Layer should be aware of presenting the proper Virtual File System to the corresponding device. This layer would also take care of tasks such as billing.

Nevertheless, on-the-cloud storage services present several drawbacks: users are not familiar with the specific implementation of the product, but almost everybody knows how to work with a USB flash drive; manual intervention of the users is required in order to identify themselves and transfer the content from their PC to the servers; and they need to be aware of the time the transfer takes to complete.

StaaS Cloud solutions provide virtually unlimited automatic storage capabilities online, overcoming the problems found in previous monolithic solutions. Very often, however, access to StaaS is not done in a transparent way for the end user who still has to rely on web browser interfaces, making an undesirable distinction between local and remote files that impacts the solution usability. Even when StaaS infrastructures are accessible through an interface similar to the one offered by local disks (so they can be accessed in a seamless way), they require some special software to be installed in the user computer, which prevents a ubiquitous access to the storage resources and breaks the requirement of transparency. And, in any case, the user has to configure the storage access in every individual device he/she wants his/her data available. Finally, the computer needs to have a separate network connection so it can access the remote infrastructure. If, whatever the reason, there is no connectivity available, the user cannot access his/her data.

For instance, USB modems rely on a series of Operating System (OS)-provided functions that make it unable to autonomously function without any OS support from the host. USB drives are not plug&play devices; they depend on the host, on the drivers, and a manual connection configuration. Moreover, the exchange of data with the Cloud is often done in an unsecured manner, exposing the users' data to a wireless medium which is deemed as highly vulnerable.

Finally, the USB interface has also universally been spread to many other sorts of devices. Among the most common are the USB Wi-Fi/mobile broadband dongles. These portable dongles provide Wi-Fi or mobile broadband to any USB-enabled PC-like device by simply plugging them in to the USB port.

In fact, it is possible to use these devices (typically USB enabled) to offer connectivity to the Internet, provided by different mobile telecommunication operators through a high speed wireless radio connection such as the offered by CDMA2000, TD SCDMA, WiMAX, and 3G/4G standards. These devices currently have the capacity to store files locally in a non-volatile flash store, which is managed by a Local Storage Controller Module. Given the need for identification in order to achieve ubiquitous access from any place, the dongles are equipped with a SIM (Subscriber Identity Module) module and the subsequent SIM Controller Module.

Nevertheless, even though there are USB dongles which allow both storing data in a local memory and wirelessly connecting to an external storage system, thus being able to reach remote storage service, devices known up to date which such features also present some problems, such as a high latency when retrieving data due to the high number of accesses over the wireless connection and its bandwidth limitations, along with a lack of transparency of the storage system that makes its usage more complicated to users and prevents ubiquitous access regardless of the type of device to which the USB dongle is connected to.

### SUMMARY OF THE INVENTION

The current invention solves the aforementioned problems by disclosing a data storage device which is capable of storing information both in an local memory and in a remote server, reducing the latency when writing and reading data by storing in the local memory the most useful information as detailed in the present document.

In a first aspect of the invention, a data storage device is disclosed. The data storage device comprises a local memory, preferably non volatile, and two different connecting means:
- first connection means configured to physically connect the data storage device to an electronic device, such as a PC, a PDA, etc. The first connection means are preferably a USB connector, which allows not only to exchange information but also to provide electric supply to the data storage device;
- second connection means configured to connect the data storage device to at least one remote storage server, preferably an on-the-cloud server to benefit from its unlimited on-demand capability. The second connection means are wireless, preferably establishing connections via a local area network, or even more preferably, a mobile broadband network which has fewer access restrictions in terms of location of access, and which is capable of providing a high bandwidth, specially with technologies 3G (Third Generation) and beyond 3G, such as LTE (Long Term Evolution).

The data storage device is, thus, capable of storing and retrieving information from both the local memory and the remote server to which the data storage device is configured to be connected through said second connection means (being neither the remote server nor the electronic device part of the scope of the present invention). To manage reading and writing requests (that is, requests to store or retrieve information) from the electronic device to which the data storage device is configured to be connected through said first connection means, the data storage devices comprises memory managing means. When receiving a reading request for a piece of information (such as a file), if the requested information is stored both in the local memory and in the remote server, the memory managing means retrieves the requested information from the local memory, thus reducing the latency of the reading operation.

To take advantage of this functionality, the memory managing means are, preferably, also configured to optimize the usefulness of the information stored in the local memory. In order to do so, the memory managing means can use different criteria to determine the usefulness of information, such as the last time it was accessed, the number of times it has been accessed (in a period of time or since it was stored in the local memory), etc.

Preferably, the data storage device also comprises a virtual filesystem manager, which is configured to create a single virtual memory in the electronic device for both the local memory and the remote storage server. This means that the storage structure is transparent to the user, who will see both the local memory and the remote server as a single drive, being the memory managing means responsible for managing the traffic information between the different elements (electronic device, local memory and remote server).

Two preferred options for the memory managing means are also hereby presented:
- The memory managing means and any other associated intelligence are located in the data storage device.
- The memory managing means comprise installable drivers adapted for different operative systems. These drivers are software, preferably stored in the remote server, which is accessed by the data storage device and sent to the electronic device for its installation.

In another aspect of the present invention, a method for reading/writing data is disclosed. The method comprises the steps of:
- Connecting (through first connection means) a data storage device to an electronic device. Said data storage device comprises a local memory.
- Wirelessly connecting (through second connection means) said data storage device to, at least, one remote storage.
- Receiving a request from said electronic device to read a piece of information and, if the requested information is stored both in the local memory and in at least said remote storage server, reading said requested information from the local memory (thus reducing the latency of the reading operation) and sending the requested information to said electronic device.

Preferably, the method also comprises, if any information stored in the local memory is not stored in said remote server, storing in said remote server said information stored in the local memory, that is, saving a copy of the information in the remote server, which has less or none memory limitations.

Also preferably, if a piece of information is to be stored in the local memory (for example as a consequence of a writing request from the electronic device), and there is not enough free space in the local memory, part of the information already stored in the local memory is removed, being this information chosen according to a criterion which takes into account requests from the electronic device regarding said information. The most useful (likely to be accessed) information is thus stored in the local memory.

The criterion is preferably to erase information with a least recent date in which the information was requested for the last time or to erase information which has been requested a fewest number of times.

Preferably, whenever information is read from the remote server, it is stored in the local memory.

Also preferably, the method is transparent to a user of the electronic device, by comprising a step of presenting the local memory and the remote server to said electronic device as a single virtual memory.

Preferably, the method also comprises sending to the electronic device a driver compatible with an operative system of the electronic device. The driver, when installed, can manage any other step of the method from the electronic device. Even more preferably, the driver is fetched from the remote server, which due to its memory capabilities can store different drivers for different operative systems.

In yet another aspect of the present invention, computer program means configured to perform the described method are disclosed.

The data storage device presented is thus capable of storing data in a remote server, thus overcoming any local memory capacity limitation, while reducing the latency associated to traditional remote servers by keeping the most useful information in a local memory, which provides faster access. The described data storage device additionally provides this capabilities in a transparent manner, which improves user experience. The use of mobile broadband also improves bandwidth and ubiquitous access. These and other advantages will be apparent in the light of the detailed description of the invention

### BRIEF DESCRIPTION OF THE DRAWINGS

For the purpose of aiding the understanding of the characteristics of the invention, according to a preferred practical embodiment thereof and in order to complement this description, the following figures are attached as an integral part thereof, having an illustrative and non-limiting character:
Figure 1 shows a scheme of the device of the invention according to one of its preferred embodiments, along with a PC and a remote server as an example of interaction.
Figure 2 shows in detail the components of the device of the invention according to one of its preferred embodiments.

### DETAILED DESCRIPTION OF THE INVENTION

The matters defined in this detailed description are provided to assist in a comprehensive understanding of the invention. Accordingly, those of ordinary skill in the art will recognize that variation changes and modifications of the embodiments described herein can be made without departing from the scope and spirit of the invention. Also, description of well-known functions and elements are omitted for clarity and conciseness.

Note that in this text, the term "comprises" and its derivations (such as "comprising", etc.) should not be understood in an excluding sense, that is, these terms should not be interpreted as excluding the possibility that what is described and defined may include further elements, steps, etc.

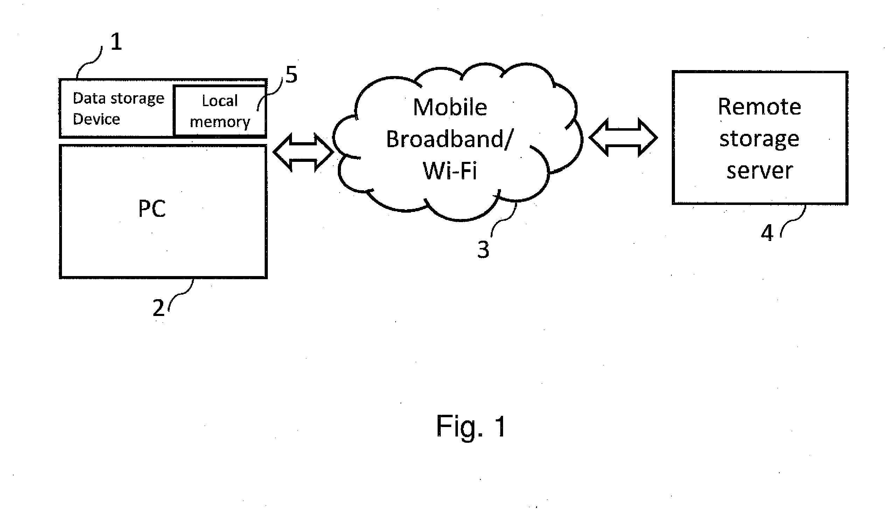

Figure 1 shows the architecture of a data storage device 1 according to a preferred embodiment of the present invention, which also implements the method of the invention according to a preferred embodiment, as further described in this document. The data storage device 1 comprises a local memory 5 (which can be also named as internal memory), such as a flash memory. In the preferred embodiment, the whole data storage device is implemented as a small portable device, similar in appearance to traditional USB flash drives, although other implementations are possible with different structures and ports. Figure 1 also shows an electronic device 2, such as a PC, a PDA, a camera or any other device with compatible interfaces with the data storage device 1; and a remote server 4, for example an on-the cloud storage server, which is accessed via a communication network 4, such as a wireless Local Access Network or a Mobile broadband network. The electronic device 2, the remote server 4 and the network 3 are not part of the scope of the invention. Also notice that more than one local memories and/or more than one remote servers can be managed by the invention as disclosed.

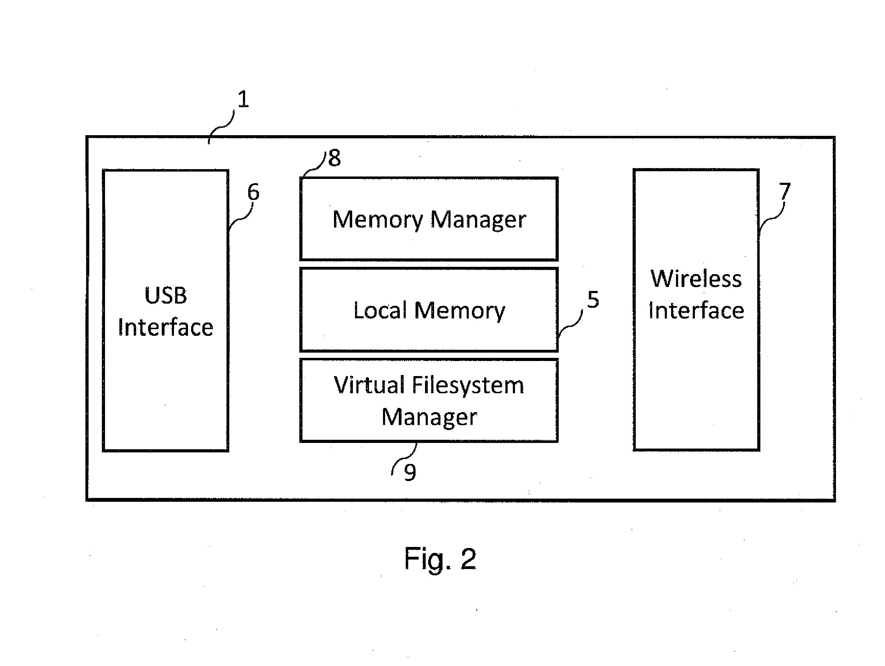

Figure 2 shows in detail the data storage device 1. The data storage device 1 comprises connection means to allow communications with the electronic device 1 and the remote server 4:
- First communication means 6 configured to establish a connection with the electronic device 2, preferably physical (i.e. wired, with a physical contact), such as a USB connector, which additionally provides electric supply to the electronic device.
- Second communication means 7 configured to establish a wireless connection with a remote server 4 as previously described. LTE and other technologies beyond 3G are specially appropriate for the present device as they allow transmission rates over 300Mbps, although other alternatives can provide the required functionalities.
The data storage device 1 also comprises two key control elements:
- Memory manager 8 (also named memory managing means) which manages all accesses to both the local memory 5 and the remote server 4 (via the communication network 3), as further described in this document.
- Virtual Filesystem Manager 9, which presents the local memory 5 and the remote server 4 to the electronic device 2 as a single virtual memory. That is, when a user of the electronic device 2, accesses the data storage device 1, both the local memory 5 and the remote server 4 appear merged in a single virtual drive. The architecture of data storage is thus transparent to the user, who does not choose where to store its files, but rather sends them to said virtual drive, being the memory manager 8 in charge of optimizing its storage. The same is applicable to reading operations, in which the user does not need to know if a file is in the local memory 5 or in the remote server 4 to retrieve, as the files from both elements are presented as being in a same virtual memory.

To optimize the latency of accesses to stored information (that is, the time needed to perform reading requests), the memory manager 8 is configured to receive requests for information (for example a file), and if said information is stored both in the local memory 5 and in the remote server 4, the memory manager 8 reads the information from the local memory 5, which has the lower latency and sends it to the electronic device. Thus, the process can be regarded as the electronic device 2 accesses the information from the local memory 5, being said decision transparent to the user of the electronic device 2.

Obviously, if the requested information is only stored in the local memory 5, the memory manager retrieves it from the local memory 5, and if it is only stored in the remote server 4, the memory manager 8 retrieves it from said remote server 4.

Different implementations are possible within the scope of the present invention regarding traffic of information between the different elements involved, as further described in the present document.

According to a preferred embodiment, whenever a write request from the electronic device 2 is received, the memory manager 8 preferably stores the information in the local memory 5. The information from the local memory 5 is then sent to the remote server 4. This sending can be performed in different manners:
- Periodically checking if information stored in the local memory 5 is not stored in the remote server 4, and in that case, storing the information in said remote server 4.
- Only checking if the information stored in the local memory 5 is not stored in the remote server 4, whenever said information is going to be erased from the local memory 4,

Other possible embodiments may comprise memory managers 8 configured to directly store the information in the remote server 4, or simultaneously in both the remote server 4 and the local memory 5.

Also, whenever information is read from the remote server 4 according to a request, if said information is not stored in the local memory, there are two possible embodiments:
- Always storing the read information in the local memory 5.
- Storing the read information in the local memory 5 only if so dictated by a usefulness criterion as described later in this document.

To determine which information is more likely to be requested by the user, and thus, should be stored in the local memory 5, a criterion regarding requests for that information is used, removing from the local memory 5 the least useful information according to said criterion when new information is to be stored and there is not enough free space. Different criteria can be used, for example, the following two rules, although other criteria or combinations of such, can be chosen within the scope of the invention:
- The least useful file in the local memory is considered the one which has not been requested for a longer time (that is, if a file stored in the local memory is read, then it becomes the "youngest" or "most useful" file). This is equivalent to checking the date of the last access and removing the file with the oldest date.
- The least useful file in the local memory is considered the one which has been requested fewer times in a given period.

There are also two additional options for the managing of the data storage device 1 intelligence:
- Completely integrating in the data storage device 1.
- Sharing part of the intelligence with the electronic device 2 by means of a driver, compatible with the operative system of the electronic device 2. The driver is preferably stored in the remote server 4 and accessed by the memory storage device 1 which sends it to the electronic device 2 to be therein installed. This installation is performed the first time the memory storage device 1 is plugged into the electronic device 2, and allows the electronic device 2 to manage any subset of steps of the method.

In both cases, the structure and logic of the storage is transparent to the user.

As for the plugging procedure, whenever the data storage device 1 is connected to the electronic device 2, the electronic device 2 identifies the data storage device 1 and installs any software if necessary. The connectivity of the communication network 3 is automatically checked. If the network 3 is functional, and a connection can be established with the remote server 4, the data storage device logs in the remote server 4 and authenticates if necessary (for which the memory storage device 1 may comprise the subsequent SIM modules). The file and folder structure is then synchronised between the remote server 4 and the local memory 5.

If the connection with the remote server 4 is not available at a given time, the data storage device 1 is capable of working in an "off-line" mode, acting as a standard memory using only the local memory 5. When the connection is re-established, the content of the local memory may be stored in the remote server.

## Claims

1. Data storage device (1) comprising:
- first connection means (6) configured to connect the data storage device (1) to an electronic device (2);
- second connection means (7) configured to wirelessly connect the data storage device (1) to at least one remote storage server (4);
- a local memory (5);
**characterized in that** the data storage device (1) also comprises:
- memory managing means (8) configured to receive a request from said electronic device (2) to which the data storage device (1) is configured to be connected through said first connection means (6) to read a piece of information and to, if the requested piece of information is stored in the local memory (5) and in at least one remote storage server (5) to which the data storage device (1) is configured to be connected through said second connection means (7), read said requested piece of information from the local memory (5) and send the requested piece of information to said electronic device (2).

2. Data storage device (1) according to claim 1 wherein the memory managing means (8) are also configured to, if a piece of information stored in the local memory (5) is not stored in said remote server (4), store in said remote server (4) said piece of information stored in the local memory (5).

3. Data storage device (1) according to any of the previous claims wherein the memory managing means (8) are also configured to, if a piece of information is to be stored in the local memory (5):
- if there is enough free space in said local memory (5), store said piece of information in the local memory (5);
- if there is not enough free space in said local memory (5), erase from the local memory (5) at least part of the information already stored in said local memory (5) according to a criterion associated to requests from said electronic device (2), and then store in the local memory (5) said piece of information to be stored.

4. Data storage device (1) according to claim 3 wherein said criterion is one of the following ones: to erase information with a least recent date in which the information was requested for the last time or to erase information which has been requested a fewest number of times.

5. Data storage device (1) according to any of the previous claims wherein the memory managing means (8) are also configured to, if a piece of information is read from the remote server (4) and the read piece of information is not stored in the local memory (5), store the read piece of information in the local memory (5).

6. Data storage device (1) according to any of the previous claims wherein the local memory (5) is a non-volatile memory.

7. Data storage device (1) according to any of the previous claims wherein the first connection means (6) are a USB connector.

8. Data storage device (1) according to any of the previous claims wherein the second connection means (7) are either mobile broadband connection means or most preferably,-wireless local area network connection means.

9. Data storage device (1) according to any of the previous claims wherein the at least one remote storage server (4) is an on-the-cloud storage server.

10. Data storage device (1) according to any of the previous claims which also comprises a virtual file system manager (9) configured to present the local memory (5) and said remote server (4) to said electronic device (2) as a single virtual memory.

11. Data storage device (1) according to any of the previous claims wherein the memory managing means (8) are also configured to send to said electronic device (2) a driver compatible with an operative system of the electronic device (2), wherein said driver shares managing tasks with the memory managing means (8).

12. Data storage device according to claim 11 wherein the memory managing means (8) is configured to fetch said driver from the remote server (4).

13. A method of reading/writing data comprising the steps of:
- connecting a data storage device (1) to an electronic device (2) (through first connection means (6)), said data storage device (1) comprising a local memory (5);
- wirelessly connecting said data storage device (1) to at least one remote storage server (4) (through second connection means (7));
**characterized in that** it further comprises:
- receiving a request from said electronic device (2) to read a piece of information and, if the requested piece of information is stored in the local memory (5) and in at least said remote storage server (4), reading said requested piece of information from the local memory (5) and sending the requested piece of information to said electronic device (2).

14. The method of claim 13, further comprising the step of, if a piece of information stored in the local memory (5) is not stored in said remote server (4), storing in said remote server (4) said piece of information stored in the local memory (5).

15. The method of either claim 13 or 14, further comprising the steps of, if an piece of information is to be stored in the local memory (5):
- if there is enough free space in said local memory (5), storing said piece of information in the local memory (5);
- if there is not enough free space in said local memory (5), erasing from the local memory (5) at least part of the information already stored in said local memory (5) according to a criterion associated to requests from said electronic device (2), and then storing in the local memory (5) said piece of information to be stored.

16. The method of claim 15, wherein said criterion is one of the following ones: to erase information with a least recent date in which the information was requested for the last time or to erase information which has been requested a fewest number of times.

17. The method of any claims 13-16, further comprising, if a piece of information is read from the remote server (4) and the read piece of information is not stored in the local memory (5), storing the read piece of information in the local memory (5).

18. The method of any claims 13-17, further comprising presenting the local memory (5) and said remote server (4) to said electronic device (2) as a single virtual memory.

19. The method of any claims 13-18, further comprising sending to said electronic device (2) a driver compatible with an operative system of the electronic device (2), wherein said driver shares managing tasks with memory managing means (8) of the data storage device (1).

20. The method of claim 19, further comprising fetching said driver from the remote server (4).

21. A computer program comprising computer program code means adapted to perform the steps of the method according to any claims from 13 to 20 when said program is run on a computer, a digital signal processor, a field-programmable gate array, an application-specific integrated circuit, a microprocessor, a micro-controller, or any other form of programmable hardware.
